# EUROPÄISCHE PATENTSCHRIFT

(11) **EP 0 250 032 B1**
(45) Veröffentlichungstag und Bekanntmachung des Hinweises auf die Patenterteilung: **24.03.1993**
(21) Anmeldenummer: 87201101.0
(22) Anmeldetag: 11.06.1987
(51) Int. Cl.: G11B 15/10, G11B 25/06, G11B 31/00

(54) **Aufzeichnungs- und Wiedergabegerät**
Recording and reproducing apparatus
Appareil d'enregistrement et de reproduction

(30) Priorität: 17.06.1986 AT 1649/86
(43) Veröffentlichungstag der Anmeldung: 23.12.1987
(73) Patentinhaber: Philips Electronics N.V., 5621 BA Eindhoven (NL)
(72) Erfinder: Veigl, Johann, NL-5656 AA Eindhoven (NL)
(74) Vertreter: Smit, Frederik Jan

(56) Entgegenhaltungen:
- DE-A- 2 833 552
- GB-A- 2 144 259
- US-A- 4 121 262
- US-A- 4 309 729
- US-A- 4 543 618
- PATENT ABSTRACTS OF JAPAN vol. 6, no. 206 (P-149)(1084) 19 Oktober 1982, & JP-A-57 111847
- PATENT ABSTRACTS OF JAPAN vol. 7, no. 6 (P-167)(1151) 11 Januar 1983, & JP-A-57 164441

## Beschreibung

Die Erfindung bezieht sich auf ein Aufzeichnungs- und Wiedergabegerät für in Kassetten untergebrachte bandförmige Aufzeichnungsträger mit einem zum Antreiben und Abtasten eines ersten Aufzeichnungsträger vorgesehenen, nur zum Wiedergeben ausgebildeten ersten Laufwerk, in dem zumindest die Betriebsarten "Stop", "Pause" und "Wiedergabe im Normallauf" einschaltbar sind, und mit einem zum Antreiben und Abtasten eines zweiten Aufzeichnungsträgers vorgesehenen, zum Aufzeichnen und Wiedergeben ausgebildeten zweiten Laufwerk, in dem zumindest die Betriebsarten "Stop", "Pause", "Aufnahme im Normallauf" und "Wiedergabe im Normallauf" einschaltbar sind, die beide je eine mehrere Antriebsteile aufweisende Antriebseinrichtung zum Antreiben des betreffenden Aufzeichnungsträgers, je eine Abtasteinrichtung zum Abtasten des betreffenden Aufzeichnungsträgers und je eine zwischen einer Stop-Position, einer Pause-Position und einer Normallauf-Position verstellbare Verstelleinrichtung zum Verstellen der Abtasteinrichtung und mindestens eines Antriebstelle der Antriebseinrichtung des betreffenden Laufwerkes entsprechend der im demselben eingeschalteten Betriebsart aufweisen und die beide mit je einem eine Anzahl von Tasten aufweisenden Tastensatz zum Einschalten der Betriebsarten in dem betreffenden Laufwerk versehen sind, wobei durch Betätigen mindestens einer Taste des Tastensatzes jedes Laufwerkes die Verstelleinrichtung desselben verstellbar ist und durch Betätigen einer Taste des Tastensatzes des ersten Laufwerkes und mindestens der Taste zum Einschalten der Betriebsart "Wiedergabe im Normallauf" des Tastensatzes des zweiten Laufwerkes eine Betriebsart "Aufeinanderfolgende Wiedergabe im Normallauf" in den beiden Laufwerken einschaltbar ist, bei der zuerst im ersten Laufwerk dessen Verstelleinrichtung in ihre Normallauf-Position verstellt und die Betriebsart "Wiedergabe im Normallauf" eingeschaltet und im zweiten Laufwerk dessen Verstelleinrichtung in ihre Pause-Position verstellt und die Betriebsart "Pause" eingeschaltet und danach im ersten Laufwerk dessen Verstelleinrichtung in ihre Stop-Position verstellt und die Betriebsart "Stop: eingeschaltet und im zweiten Laufwerk dessen Verstelleinrichtung in ihre Normallauf-Position verstellt und die Betriebsart "Wiedergabe im Normallauf" eingeschaltet und danach auch im zweiten Laufwerk dessen Verstelleinrichtung in ihre Stop-Position verstellt und die Betriebsart "Stop" eingeschaltet wird, und mit einem sich vom ersten Laufwerk zum zweiten Laufwerk erstreckenden Steuerhebel, der in der Betriebsart "Aufeinanderfolgende Wiedergabe im Normallauf" beim Einschalten der Betriebsart "Stop" im ersten Laufwerk das Einschalten der Betriebsart "Wiedergabe im Normallauf" im zweiten Laufwerk steuert.

Der eingangs angeführten Gattung entsprechend ist bei einem solchen Gerät, vgl. auch GB-A-2 144 259, in der Betriebsart "Aufeinanderfolgende Wiedergabe im Normallauf" während des Wiedergabebetriebes im ersten Laufwerk im zweiten Laufwerk die Betriebsart "Pause" eingeschaltet, wobei die Verstelleinrichtung ihre Pause-Position einnimmt und über diese Verstelleinrichtung ein Antriebsrad für den Aufwickeldorn und die Andruckrolle der Antriebseinrichtung des zweiten Laufwerkes ausser Antriebsverbindung gehalten sind, so dass kein Antriebs des zweiten Aufzeichnungsträgers erfolgt. Dadurch, dass die Andruckrolle und das Antriebsrad für den Aufwickeldorn ausser Antriebsverbindung gehalten sind, wobei die Andruckrolle von der Bandantriebswelle abgehoben ist, erfolgt auch dann kein Antrieb des zweiten Aufzeichnungsträgers, wenn der zum Antreiben der Antriebseinrichtung vorgesehene Motor eingeschaltet ist, wie dies der Fall ist, wenn das Gerät nur einen gemeinsamen Motor zum Antreiben der Antriebseinrichtungen der beiden Laufwerke aufweist, der nach seinem Einschalten gleichzeitig die Antriebseinrichtungen der beiden Laufwerke antreibt. Ferner erfolgt bei einem solchen Gerät der eingangs angeführten Gattung in der Betriebsart "Aufeinanderfolgende Wiedergabe im Normallauf" die zeitliche Ablaufsteuerung zum aufeinandefolgenden Durchführen der Betriebsart "Wiedergabe im Normallauf" in den beiden Laufwerken auf rein mechanische Weise mit Hilfe des Steuerhebels.

Bei einem bekannten Gerät der eingangs angeführten Gattung weisen die Tastensätze der beiden Laufwerke eine ungleiche Anzahl von Tasten auf, weil der Tastensatz des nur zum Wiedergeben ausgebildeten ersten Laufwerkes im Vergleich zum Tastensatz des zum Aufzeichnen und Wiedergeben ausgebildeten zweiten Laufwerkes keine Taste zum Einschalten der Betriebsart "Aufnahme im Normallauf" aufweist. Somit unterscheiden sich die beiden Laufwerke hinsichtlich ihrer Tastensätze. Dies ist ungünstig im Hinblick auf eine möglichst einheitliche Ausbildung der beiden Laufwerke, die aber Voraussetzung für eine preisgünstige Herstellung der Laufwerke ist. Zum Einschalten der Betriebsart "Aufeinanderfolgende Wiedergabe im Normallauf" müssen bei diesem bekannten Gerät aufeinanderfolgend die Taste zum Einschalten der Betriebsart "Wiedergabe im Normallauf" des Tastensatzes des ersten Laufwerkes und die Taste zum Einschalten der Betriebsart "Pause" des Tastensatzes des zweiten Laufwerkes sowie die Taste zum Einschalten der Betriebsart "Wiedergabe im Normallauf" des Tastensatzes des zweiten Laufwerkes betätigt werden, so dass insgesamt drei Tasten in zeitlich richtiger Aufeinanderfolge zu betätigen sind, was im Hinblick auf eine möglichst einfache Bedienung ungünstig ist. Nach ihrer Betätigung, die je entgegen der Kraft einer Rückstellfeder festgehalten. Ferner ist bei diesem bekannten Gerät der Steuerhebel beim Betätigen der Taste zum Einschalten der Betriebsart "Wiedergabe im Normallauf" des Tastensatzes des ersten Laufwerkes von dieser auf einer Ruhelage in eine Betriebslage verstellbar, aus der er dann wieder in seine Ruhelage zurückverstellt wird, wenn die Taste zum Einschalten der Betriebsart "Wiedergabe im Normallauf" des Tastensatzes des ersten Laufwerkes von ihrer Einschaltlage in ihre Ausschaltlage gebracht wird, was beim Einschalten der Betriebsart "Stop" im ersten Laufwerk erfolgt. Dieses Einschalten der Betriebsart "Stop" im ersten Laufwerk kann durch Betätigen der Taste zum Einschalten dieser Betriebsart des Tastensatzes des ersten Laufwerkes oder über eine Endabschaltungseinrichtung des ersten Laufwerkes, die bei Erreichen des Endes des ersten Aufzeichnungsträgers im ersten Laufwerk die Betriebsart "Stop" einschaltet, erfolgen. Bei der vorerwähnten Zurückverstellung des Steuerhebels in seine Ruhelage wird von ihm über einen zusätzlich vorgesehenen Zwischenhebel eine Entriegelung der Taste zum Einschalten der Betriebsart "Pause" des Tastensatzes des zweiten Laufwerkes bewirkt, so dass diese Taste von ihrer Einschaltlage in ihre Ausschaltlage zurückkehrt und darauffolgend im zweiten Laufwerk dessen Verstelleinrichtung in ihre Normallauf-Position verstellt und die Betriebsart "Wiedergabe im Normallauf" eingeschaltet wird. Bei dieser Konstruktion steuert der Steuerhebel das Einschalten der Betriebsart "Wiedergabe im Normallauf" im zweiten Laufwerk über den Zwischenhebel und über die Taste zum Einschalten der Betriebsart "Pause" des Tastensatzes des zweiten Laufwerkes, was relativ kompliziert und im Hinblick auf eine hohe Betriebssicherheit ungünstig ist.

Die Erfindung hat sich zur Aufgabe gestellt, die vorstehende angeführten Schwierigkeiten zu beseitigen und ein Gerät eingangs angeführter Gattung so auszubilden, dass die beiden Laufwerke und das gesamte Gerät preisgünstig hergestellt werden können und dass zum Einschalten der Betriebsart "Aufeinanderfolgende Wiedergabe im Normallauf" weniger als drei Tasten der Tastensätze der beiden Laufwerke betätigt werden müssen und dass eine einfache und betriebssichere Steuerfunktion des Steuerhebels erhalten wird. Hierfür ist die Erfindung dadurch gekennzeichnet, dass die Tastensätze der beiden Laufwerke eine gleiche Anzahl von Tasten aufweisen und dass die Betriebsart "Aufeinanderfolgend Wiedergabe im Normallauf" durch Betätigen der Taste des Tastensatzes des ersten Laufwerkes, die der Taste zum Einschalten der Betriebsart "Aufnahme im Normallauf" des Tastensatzes des zweiten Laufwerkes entspricht, und der Taste zum Einschalten der Betriebsart "Wiedergabe im Normallauf" des Tastensatzes des zweiten Laufwerkes einschaltbar ist und dass durch Betätigen der Taste des Tastensatzes des ersten Laufwerkes, die der Taste zum Einschalten der Betriebsart "Aufnahme im Normallauf" des Tastensatzes des zweiten Laufwerkes entspricht, im ersten Laufwerk dessen Verstelleinrichtung in die Normallauf-Position verstellt und die Betriebsart "Wiedergabe im Normallauf" eingeschaltet und über den durch Betätigen dieser Taste verstellbaren Steuerhebel im zweiten Laufwerk dessen Verstelleinrichtung in ihrer Pause-Position positioniert und die Betriebsart "Pause" mechanisch eingeschaltet wird. Auf diese Weise ist erreicht, dass die beiden Laufwerke des Gerätes dieselben Tastensätze aufweisen, was im Hinblick auf eine möglichst einheitliche Ausbildung der beiden Laufwerke und daher eine preisgünstige Herstellung der Laufwerke und damit des gesamten Gerätes vorteilhaft ist, und dass zum Einschalten der Betriebsart "Aufeinanderfolgende Wiedergabe im Normallauf" nur zwei Tasten, nämlich nur je eine Taste der Tastensätze der beiden Laufwerkes, zu betätigen sind, womit eine einfache Bedienung erreicht ist, wobei die Taste des Tastensatzes des ersten Laufwerkes, die der Taste zum Einschalten der Betriebsart "Aufnahme im Normallauf" des Tastensatzes des zweiten Laufwerkes entspricht, eine Doppelfunktion erfüllt, weil mit ihr im ersten Laufwerk die Betriebsart "Wiedergabe im Normallauf" und im zweiten Laufwerk über den Steuerhebel die Betriebsart "Pause" einschaltbar ist. Dadurch, dass der Steuerhebel unmittelbar mit der Verstelleinrichtung des zweiten Laufwerkes zusammenwirkt, ist eine besonders einfache und betriebssichere Steuerfunktion des Steuerhebels erreicht.

An dieser Stelle sei erwähnt, dass z.B. aus GB-A-2 144 259 und US-A-4 309 729 auch ein Gerät mit zwei Laufwerken bekannt ist, das aber einer anderen Gattung als der eingangs angeführten Gattung angehört. Bei diesem bekannten Gerät ist in der Betriebsart "Aufeinanderfolgende Wiedergabe im Normallauf" während des Wiedergabebetriebes im ersten Laufwerk im zweiten Laufwerk nicht wie bei einem Gerät der eingangs angeführten Gattung die Betriebsart "Pause" eingeschaltet, sondern ist mit Hilfe von elektrischen Schaltern die Stromversorgung für den zum Antreiben der Antriebseinrichtung des zweiten Laufwerkes vorgesehenen Motor abgeschaltet, so dass kein Antrieb des zweiten Aufzeichnungsträgers erfolgt. Dadurch, dass während des gesamten Wiedergabebetriebes im ersten Laufwerk die Stromversorgung für den zum Antreiben der Antriebseinrichtung des zweiten Laufwerkes vorgesehenen Motor abgeschaltet ist und dieser daher stillsteht, kann dieser Motor nur zum Antreiben der Antriebseinrichtung des zweiten Laufwerkes und nicht zugleich zum Antreiben der Antriebseinrichtung des ersten Laufwerkes verwendet werden. Es muss daher bei diesem bekannten Gerät jedes Laufwerkes einen separaten Motor zum Antreiben der betreffenden Antriebseinrichtung aufweisen, was bei einem Gerät der eingangs angeführten Gattung nicht der Fall sein muss, weil bei diesem Gerät in einfacher Weise auch mit nur einem gemeinsamen Motor für beide Laufwerkes das Auslangen gefunden werden kann, wie dies bereits zuvor erwähnt ist. Ferner erfolgt bei diesem bekannten Gerät in der Betriebsart "Aufeinanderfolgende Wiedergabe im Normallauf" die zeitliche Ablaufsteuerung zum aufeinanderfolgenden Durchführen der Betriebsart "Wiedergabe im Normallauf" in den beiden Laufwerken nicht einfach auf mechanische Weise wie bei einem Gerät der eingangs angeführten Gattung, sondern auf elektrischen Schalter, die während des Wiedergabebetriebes im ersten Laufwerk den Motor zum Antreiben der Antriebseinrichtung des ersten Laufwerkes an die Stromversorgung anschalten und den Motor zum Antreiben der Antriebseinrichtung des zweiten Laufwerkes von der Stromversorgung abgeschaltet halten und nach dem Einschalten der Betriebsart "Stop" im ersten Laufwerk, was durch Betätigen der hierfür vorgesehenen Taste des Tastensatzes des ersten Laufwerkes oder durch Ansprechen einer Endabschaltungseinrichtung des ersten Laufwerkes erfolgt, den Motor zum Antreiben der Antriebseinrichtung des ersten Laufwerkes von der Stromversorgung abgeschaltet halten und den Motor zum Antreiben der Antriebseinrichtung des zweiten Laufwerkes an die Stromversorgung anschalten. Eine solche elektrische Ablaufsteuerung ist teurer als eine mechanische Ablaufsteuerung mit einem Steuerhebel.

Von diesem bekannten Gerät, das aber, wie vorstehend ausgeführt, einer anderen Gattung als der eingangs angeführten Gattung angehört, ist es an sich bekannt, das Einschalten der Betriebsart "Aufeinanderfolgende Wiedergabe im Normallauf" durch Betätigen von zwei Tasten, nämlich je der Taste zum Einschalten der Betriebsart "Wiedergabe im Normallauf" der Tastensätze der beiden Laufwerke, zu erreichen. Bei diesem bekannten Gerät sind aber die beiden Laufwerke mit Tastensätzen mit ungleicher Anzahl von Tasten versehen, was, wie bereits vorstehend erläutert ist, nachteilig im Hinblick auf eine möglichst einheitliche Ausbildung der beiden Laufwerke ist. Demgegenüber weisen beim erfindungsgemässen Gerät die Tastensätze der beiden Laufwerke eine gleiche Anzahl von Tasten auf, wodurch die bereits angeführten erfindungsgemässen Vorteile erhalten werden.

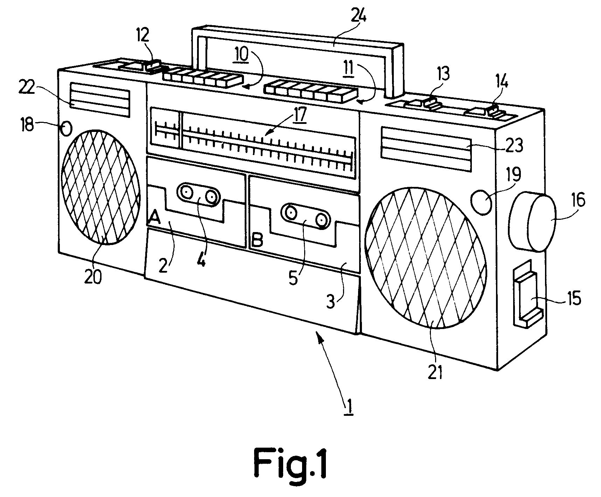

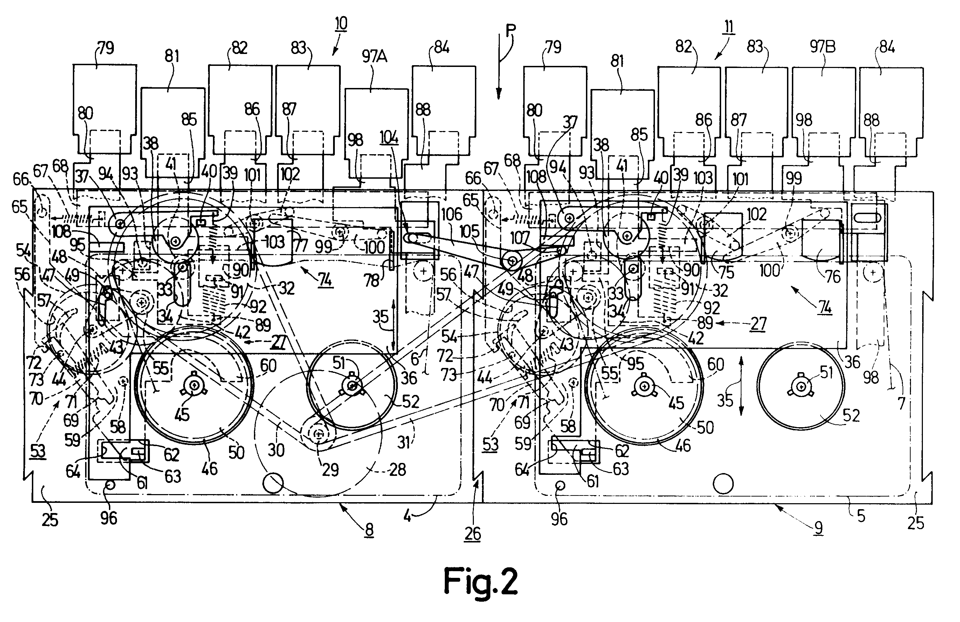

Die Erfindung wird im folgenden anhand eines in den Zeichnungen dargestellten Ausführungsbeispieles, auf das sie jedoch nicht beschränkt sein soll, näher beschrieben. Die Fig. 1 zeigt schematisch in einer perspektivischen Ansicht in einem verkleinertem Massstab ein Aufzeichnungs- und Wiedergabegerät für in Kassetten untergebrachte, bandförmige, magnetisierbare Aufzeichnungsträger, das zwei Laufwerke aufweist, von denen eines nur zum Wiedergeben und das andere zum Aufzeichnen und Wiedergeben ausgebildet ist und die mit je einem Tastensatz zum Einschalten der Betriebsarten in den beiden Laufwerken versehen sind. Die Fig. 2 zeigt in schematischer Weise in einem gegenüber Fig. 1 grösseren Massstab die im Zusammenhang mit der Erfindung wesentlichen Teile der beiden Laufwerke des Gerätes gemäss Fig. 1, wobei jener Betriebszustand in der Betriebsart "Aufeinanderfolgende Wiedergabe im Normallauf" dargestellt ist, bei dem in dem zum Wiedergeben ausgebildeten ersten Laufwerk die Betriebsart "Wiedergabe im Normallauf" und in dem zum Aufzeichnen und Wiedergeben ausgebildeten zweiten Laufwerk die Betriebsart "Pause" eingeschaltet ist.

Die Fig. 1 zeigt ein tragbares Aufzeichnungs- und Wiedergabegerät 1, das mit einem Rundfunkempfänger kombiniert ist. Das Gerät 1 weist zwei je mit einem teilweise durchsichtigen, schwenkbar am Gerät gelagerten Deckel 2 bzw. 3 abschliessbare Kassettenaufnahmemulden zum Aufnehmen je einer, unter der Bezeichnung Compact-Cassette allgemeine bekannten Kassette 4 bzw. 5 auf, in denen je eine bandförmiger, magnetisierbarer Aufzeichnungsträger 6 bzw. 7, der im folgenden kurz Magnetband genannt ist, untergebracht und dabei von einem ersten zu einem zweiten rotierend antreibbaren Wickelkern geführt ist. Die Kassetten 4 und 5 und die darin untergebrachten Magnetbänder 6 und 7 sind in Fig. 2 nur schematisch mit strichpunktierten Linien angedeutet, um die Deutlichkeit der Zeichnung nicht zu beeinträchtigen. Zum Antreiben und Abtasten des in der Kassette 4 untergebrachten ersten Magnetbandes 6 weist das Gerät 1 ein nur zum Wiedergeben von auf dem ersten Magnetband 6 gespeicherten Signalen ausgebildetes erstes Laufwerk 8 auf, in dem zumindest die Betriebsarten "Stop", "Pause" und "Wiedergabe im Normallauf" einschaltbar sind. Zum Antreiben und Abtasten des in der Kassette 5 untergebrachten zweiten Magnetbandes 7 weist das Gerät 1 ein zum Aufzeichnen von Signalen auf dem zweiten Magnetband 7 und zum Wiedergeben von Signalen von dem zweiten Magnetband 7 ausgebildetes zweites Laufwerk 9 auf, in dem zumindest die Betriebsarten "Stop", "Pause", "Aufnahme im Normallauf" und "Wiedergabe im Normallauf" einschaltbar sind. Die beiden Laufwerke 8 und 9 sind in Fig. 2, soweit dies im Zusammenhang mit der vorliegenden Erfindung erforderlich ist, detailliert dargestellt und werden nachfolgend anhand der Fig. 2 näher beschrieben. Zum Einschalten der Betriebsarten in den beiden Laufwerken 8 und 9 ist jedes derselben mit einem eine Anzahl von Tasten aufweisenden Tastensatz 10 bzw. 11 versehen. Der Aufbau der beiden Tastensätze 10 und 11 wird ebenfalls nachfolgend anhand der Fig. 2 näher beschrieben.

Wie aus Fig. 1 ersichtlich ist, weist das Gerät 1 ferner einen Schiebeschalter 12 zum Umschalten zwischen Rundfunkempfang-Betrieb und Kassetten-Aufnahme/Wiedergabe-Betrieb, zwei Schieberegler 13 und 14 zur Lautstärkeregelung bzw. zur Klangfarbenregelung, einen Schiebeschalter 15 zum Umschalten zwischen verschiedenen Rundfunk-Wellenbereichen und einen Drehknopf 16 zur Senderwahl beim Rundfunkempfang-Betrieb auf. Der jeweils gewählte Sender ist an einer Senderanzeigeskala 17 ablesbar. Ferner weist das Gerät 1 zwei Mikrofone 18 und 19, zwei Lautsprecher 20 und 21 und zwei Aussteuerungs-Anzeigeeinrichtungen 22 und 23 auf. Um das Gerät 1 bequem tragen zum können, ist dasselbe mit einem Tragbügel 24 versehen.

Im folgenden werden anhand der Fig. 2 die beiden Laufwerke 8 und 9 des Gerätes 1 näher beschrieben. In Fig. 2 sind mit einer Ausnahme alle Bauteile der beiden Laufwerke, die in beiden Laufwerken in der gleichen Weise vorgesehen sind, mit demselben Bezugszeichen bezeichnet. Die beiden Laufwerke 8 und 9 weisen je ein im wesentlichen plattenförmiges Chassis 25 auf. Die beiden vollkommen gleiche ausgebildeten Chassis 25 sind über eine Schwalbenschwanz-Verbindung 26 in einfacher Weise miteinander verbunden.

Die beiden Laufwerke 8 und 9 weisen je eine mehrere Antriebsteile aufweisende Antriebseinrichtung 27 zum Antreiben des betreffenden Magnetbandes 6 bzw. 7 auf. Jede Antriebseinrichtung 27 besteht hierbei aus einem in Fig. 2 gezeigten Normallauf-Antriebskomplex zum Antreiben des Magnetbandes 6 bzw. 7 im Normallauf, bei dem ein Aufzeichnen bzw. Wiedergeben erfolgt, und einem in Fig. 2 der Übersichtlichkeit halber nicht gezeigten Umspul-Antriebskomplex zum Antreiben des Magnetbandes 6 bzw. 7 im Schnelllauf, bei dem das Magnetband mit gegenüber dem Normallauf höherer Fortbewegungsgeschwindigkeit zwischen den beiden Wickelkernen in der Kassette 4 bzw. 5 umgespult wird. Die Antriebseinrichtungen 27 der beiden Laufwerke 8 und 9 sind bei vorliegendem Gerät von einem einzigen, den beiden Laufwerken gemeinsamen Motor 28 her antreibbar, der an dem Chassis 25 des ersten Laufwerkes 8 angebracht ist, und zwar entsprechend der Darstellungsweise in Fig. 2 an der Unterseite dieses Chassis. Der Motor 28 treibt zwei in axialer Richtung übereinanderliegende Riemenscheiben 29 an, die ihrerseits zwei Riemen 30 und 31 antreiben. Mit diesen beiden beiden Riemen 30 und 31 sind die Antriebseinrichtungen 27 der beiden Laufwerke 8 und 9 antreibbar. Durch das Vorsehen von nur einem Motor 28 werden die Antriebseinrichtungen 27 der beiden Laufwerke 8 und 9 stets gleichzeitig angetrieben. Selbstverständlich wäre es auch möglich, für jedes Laufwerk einen separaten Motor vorzusehen, was aber eine Verteuerung des Gerätes zur Erfolge hat.

Wie erwähnt, sind mit den beiden Riemen 30 und 31 die Antriebseinrichtungen 27 der beiden Laufwerke 8 und 9 gleichzeitig antreibbar. Hierfür sind die beiden Riemen 30 und 31 je über eine an der Unterseite des Chassis 25 angeordnete Schwungscheibe 32 geführt. Mit jeder Schwungscheibe 32 ist eine durch das Chassis 25 hindurchgeführte und in demselben drehbar gelagerte Bandantriebswelle 33 koaxial verbunden. Jede Bandantriebswelle 33 ist hierbei mit ihrem vom der Oberseite des Chassis 35 nach oben abstehenden freien Ende, das zum Zusammenwirken mit dem Magnetband 6 bzw. 7 vorgesehen ist, durch eine langlochförmige Freistellung 34 in einer in Richtung des Doppelpfeiles 35 am Chassis 25 verschiebbar geführten Trägerplatte 36 hindurchgeführt. An jeder Trägerplatte 36 ist ein Andruckrollenhebel 37 schwenkbar gelagert, an dem eine Andruckrolle 38 drehbar gelagert ist. Die Andruckrolle 38 ist zum Zusammenwirken mit der Bandantriebswelle 33 vorgesehen und bildet einen Antriebsteil der Antriebseinrichtung 27. Bei von der Bandantriebswelle 33 abgehobener Andruckrolle 38 stützt sich der Andruckrollenhebel 37 mit seinem freien Ende unter der Wirkung einer an ihm angreifenden Zugfeder 39 an einem von der Trägerplatte 36 abstehenden Anschlag 40 ab.

Jede Bandantriebswelle 33 trägt ein unterhalb des Chassis 25 angeordnete Ritzel 41, mit dem ein verschwenkbar gehaltenes Zwischenzahnrad 42 unabhängig von seiner Schwenkposition ständig in Eingriff steht. Das Zwischenzahnrad 42 ist auf einem dreieckförmigen Hebel 43 drehbar gelagert, der um eine Achse 44 am Chassis 25 zwischen zwei Betriebslagen verschwenkbar ist. In einer dieser Betriebslagen befindet sich das Zwischenzahnrad 42 in Eingriff mit einem zu einem Aufwickeldorn 45 koaxial angeordneten Antriebszahnrad 46, wie dies beim ersten Laufwerk 8 dargestellt ist, wogegen in der anderen Betriebslage des Hebels 43 das Zwischenzahnrad 42 ausser Eingriff von dem Antriebszahnrad 46 gebracht ist, wie dies beim zweiten Laufwerk 9 dargestellt ist. Die Verstellung des Hebels 43 zwischen seinen beiden Betriebslagen wird von der Trägerplatte 36 bewirkt, und zwar über einen als Verstellkulisse wirksamen Schlitz 47, in den ein vom Hebel 43 nach oben abstehender, durch eine rechteckförmige Freistellung 48 im Chassis 25 hindurchgeführter, als Kulissenfolger wirksamer Stift 49 hineinragt. Zu erwähnen ist noch, dass vom Antriebszahnrad 46 über eine nicht dargestellte scheibenförmige Rutschkupplung eine Antriebsscheibe 50 antreibbar ist, die mit dem Aufwickeldorn 45 drehfest verbunden ist. Der Abwickeldorn 51 ist von einem zu ihm koaxial angeordneten und mit ihm drehfest verbundenen Zahnrad 52 antreibbar. Wie aus Vorstehendem ersichtlich ist, sind die Antriebseinrichtungen 27 der beiden Laufwerke 8 und 9 vollkommen gleich ausgebildet.

Jedes der beiden Laufwerke 8 und 9 weist eine Endabschaltungseinrichtung 53 auf, die bei Erreichen eines Endes des betreffenden Magnetbandes 6 bzw. 7 in dem betreffenden Laufwerk 8 bzw. 9 die Betriebsart "Stop" einschaltet. Jede Endabschaltungseinrichtung 53 weist ein um die Achse 44 rotierend antreibbares Kulissenzahnrad 54 auf, das von einem zum Zwischenzahnrad 42 koaxialen Zwischenritzel 55 her antreibbar ist. Das Kulissenzahnrad 54 weist an seiner von der Unterseite des Chassis 25 abgewandten Seitenfläche eine in sich geschlossene Steuerkulisse 56 und eine sichelförmige Verstellkulisse 57 auf. Ferner weist jede Endabschaltungseinrichtung 53 einen um eine Achse 58 am Chassis 25 schwenkbar gelagerten, dreiarmigen Endabschaltungshebel 59 auf. Ein erster Hebelarm 60 des Endabschaltungshebels 59 steht über eine nicht dargestellte Rutschkupplung mit der mit dem Aufwickeldorn 45 drehfest verbundenen Antriebsscheibe 50 in Antriebsverbindung, so dass bei rotierendem Aufwickeldorn 45 über die Antriebsscheibe 50 und den ersten Hebelarm 60 eine Verstellkraft auf den Endabschaltungshebel 59 ausgeübt wird, die bestrebt ist, den Endabschaltungshebel 59 gemäss Fig. 2 entgegen dem Uhrzeigersinn zu verschwenken. Ein zweiter Hebelarm 61 des Endabschaltungshebels 59 trägt an seinem freien Ende einen durch eine rechteckige Freistellung 62 im Chassis nach oben durchstehenden Fortsatz 63, der zum Zusammenwirken mit der Trägerplatte 36 vorgesehen ist. Bei sich in ihrer Normallauf-Position befindlicher Trägerplatte 36, wie sie gemäss Fig. 2 die Trägerplatte 36 des ersten Laufwerkes 8 einnimmt, kann der Fortsatz 63 unter der Wirkung der über den ersten Hebelarm 60 auf den Endabschaltungshebel 59 ausgeübten Verstellkraft in eine Freistellung 64 in der Trägerplatte 36 eintauchen. Dies ist bei in ihrer Pause-Position, wie sie gemäss Fig. 2 die Trägerplatte 36 des zweiten Laufwerkes 9 einnimmt, bzw. in ihrer Stop-Position befindlicher Trägerplatte 36 nicht möglicht, wobei dann die Endabschaltungseinrichtung 53 ausser Funktion gesetzt ist. Ein dritter Hebelarm 65 des Endabschaltungshebels 59 trägt einen Stift 66, der zum Zusammenwirken mit einer nur schematisch dargestellten, mit einer Zugfeder 67 belasteten Rastschiene 68 vorgesehen ist. Mit dem Endabschaltungshebel 59 ist über eine Filmscharnier 69 ein Arm 70 gelenkig verbunden, der mit einer Druckfeder 71 gegenüber dem Endabschaltungshebel 59 verspannt ist und sich im normalen Betrieb mit seinem freien Ende an einem hakenförmigen Fortsatz 72 des Endabschaltungshebels 59 abstützt. Von dem Hebelarm 70 steht ein als Kulissenfolger dienender Stift 73 noch oben hin ab, dessen freies Endes zum Zusammenwirken mit der Steuerkulisse 56 und der Verstellkulisse 57 des Kulissenzahnrades 54 vorgesehen ist. Wie aus Vorstehendem ersichtlich ist, sind die Endabschaltungseinrichtungen 53 der beiden Laufwerke 8 und 9 vollkommen gleich ausgebildet.

Solange ein Transport des Magnetbandes 6 bzw. 7 stattfindet und somit der Aufwickeldorn 45 rotiert, treten in der Endabschaltungseinrichtung 53 folgende Bewegungsabläufe auf. Das Kulissenzahnrad 54 wird von der Schwungscheibe 32 über die Bandantriebswelle 33, das Ritzel 41, das Zwischenzahnrad 42 und das Zwischenritzel 55 rotierend entgegen dem Uhrzeigersinn angetrieben. Ferner treibt das Zwischenzahnrad 42 das Antriebszahnrad 46 und dieses über die nicht dargestellte Rutschkupplung die mit dem Aufwickeldorn 45 drehfest verbundene Antriebsscheibe 50 an, wobei die Antriebsscheibe 50 über die weitere nicht dargestellte Rutschkupplung und den ersten Hebelarm 60 auf den Endabschaltungshebel 59 eine Verstellkraft überträgt, die danach trachtet, den Endabschaltungshebel 59 entgegen dem Uhrzeigersinn zu verstellen. Solange diese Verstellkraft auf den Endabschaltungshebels 59 einwirkt, wird der vom Arm 70 des Endabschaltungshebels 59 abstehende Stift 73 mit der Steuerkulisse 56 in Berührung bleiben, wobei die Steuerkulisse 56 über den Stift 73 und den gegenüber dem Endabschaltungshebel 59 mit der Druckfeder 71 verspannten Arm 70 dem Endabschaltungshebel 59 eine Pendelbewegung erteilt, ohne dass der Stift 66 am dritten Hebelarm 65 des Endabschaltungshebels 59 mit der Rastschiene 68 in Berührung kommt. Wenn das Endes des Magnetbandes 6 bzw. 7 erreicht ist, bleibt der Aufwickeldorn 45 zwangsweise stillstehen, so dass dann auch der Aufwickeldorn 45 und die mit diesem drehfest verbundene Antriebscheibe 50 angehalten wird, wobei die Rutschkupplung zwischen der Antriebsscheibe 50 und dem Antriebszahnrad 46 durchrutscht, und folglich die Antriebswirkung auf den ersten Hebelarm 60 des Endabschaltungshebels 59 entfällt. Damit entfällt die Verstellkraft auf den Endabschaltungshebel 59 entgegen dem Uhrzeigersinn. Wenn nun nachfolgend die Steuerkulisse 56 am Kulissenzahnrad 54 den Endabschaltungshebel 59 im Uhrzeigersinn verschwenkt hat, verbleibt der Endabschaltungshebel 59 aufgrund der fehlenden Verstellkraft durch die Antreibsscheibe 50 entgegen dem Uhrzeigersinn in dieser verschwenkten Position, in der dann der am Arm 70 angebrachte Stifte 73 von der Verstellkulisse 57 erfasst wird. Da der Arm 70 über die Druckfeder 71 gegenüber dem Endabschaltungshebel 59 verspannt ist, wird nun von der Verstellkulisse 57 der Endabschaltungshebel 59 noch weiter verschwenkt, wobei dann der Stift 66 am dritten Hebelarm 65 des Endabschaltungshebels 59 gegen die Rastschiene 69 stösst und diese entgegen der Kraft der an ihr angreifenden Zugfeder 67 so weit verschiebt, dass mit der Rastschiene 68 rastend festgehaltene Tasten entrastet werden und in ihre Ausschaltlage rückkehren, so dass folglich im betreffenden Laufwerk die Betriebsart "Stop" eingeschaltet ist.

Die vorstehend beschriebenen Bewegungsabläufe finden nur dann statt, wenn sich die Trägerplatte 36 in ihrer Normallauf-Position befindet, wie dies im ersten Laufwerk 8 gezeigt ist. Wenn sich die Trägerplatte 36 in ihrer Pause-Position befindet, wie dies im zweiten Laufwerk 9 gezeigt ist, oder in ihrer Stop-Position, dann ist über den sich an der Trägerplatte 36 abstützenden Fortsatz 63 des zweiten Hebelsarms 61 des Endabschaltungshebels 59 eine Pendelbewegung des gesamten Endabschaltungshebels 59 unterbunden und somit die Endabschaltungseinrichtung 53 ausser Funktion gesetzt. In diesem Fall wird von dem angetriebenen Kulissenzahnrad 54 über dessen Steuerkulisse 56 nur dem Arm 70 eine Schwenkbewegung um das Filmscharnier 69 gegenüber dem Endabschaltungshebel 59 erteilt, wobei die Druckfeder 71 periodisch komprimiert wird.

Zum Abtasten der beiden Magnetbänder 6 und 7 weist jedes Laufwerk 8 und 9 eine Abtasteinrichtung 74 auf. Die Abtasteinrichtung 74 des zweiten Laufwerkes 8, das zum Aufzeichnen von Signalen auf dem zweiten Magnetband 7 und zum Wiedergeben von Signalen von dem zweiten Magnetband 7 ausgebildet ist, weist einen Aufnahme/Wiedergabe-Magnetkopf 75 und einen Lösch-Magnetkopf 76 auf, die beide an der Trägerplatte 36 des zweiten Laufwerkes 9 angebracht sind. Beide Magnetköpfe 75 und 76 sind mit einer neben ihrer Kopfspiegelfläche angeordneten Bandhöhenführung versehene. Die Abtasteinrichtung 74 des ersten Laufwerkes 8, das nur zum Wiedergeben von Signalen vom dem ersten Magnetband 6 ausgebildet ist, besteht aus einem Wiedergabe-Magnetkopf 77, der an der Trägerplatte 36 des ersten Laufwerkes 8 angebracht ist. Auch der Magnetkopf 77 ist mit einer neben seiner Kopfspiegelfläche angeordneten Bandhöhenführung versehen. Anstelle eines Lösch-Magnetkopfes ist an der Trägerplatte 36 des ersten Laufwerkes 8 nur eine Bandhöhenführung 78 vorgesehen.

Zum Verstellen der Abtasteinrichtung 74 jedes Laufwerkes 8 bzw. 9 und mindestens eines Antriebsteiles der Antiebseinrichtung 27 jedes Laufwerkes 8 bzw. 9, in vorliegendem Fall von zwei Antriebsteilen, nämlich der Andruckrolle 38 und des Zwischenzahnrades 42, weist jedes Laufwerk 8 bzw. 9 eine Verstelleinrichtung auf. Bei vorliegendem Gerät ist diese Verstelleinrichtung durch die Trägerplatte 36 gebildet. Die Verstellung der Abtasteinrichtung 74 und der Andruckrolle 38 durch die Trägerplatte 36 erfolgt dadurch, dass dieselben auf der Trägerplatte 36 angebracht sind. Die Verstellung des Zwischenzahnrades 42 durch die Trägerplatte 36 erfolgt über den Schlitz 47 der Trägerplatte 36 und den am Hebel 43, der das Zwischenzahnrad 42 trägt, angebrachten Stift 48. Die Trägerplatte 36 ist verstellbar zwischen einer in Fig. 2 nicht dargestellten Stop-Position, in der die Abtasteinrichtung 74 und die Andruckrolle 38 von der Kassette 4 bzw. 5 ausser Wirkverbindung gebracht sind und das Zwischenzahnrad 42 ausser Eingriff vom Antriebszahnrad 46 gehalten ist, und einer Pause-Position, wie sie im zweiten Laufwerk 9 dargestellt ist und in der die Abtasteinrichtung 74 leicht mit dem Magnetband in Kontakt steht, jedoch die Andruckrolle 38 noch in geringem Abstand von der Bandantriebswelle 33 sich befindet und das Zwischenzahnrad 42 ausser Eingriff vom Antriebszahnrad 46 gehalten ist, und einer Normallauf-Position, wie sie im ersten Laufwerk 8 dargestellt ist und in der die Abtasteinrichtung 47 statt mit dem Magnetband in Berührung steht und die Andruckrolle 38 gegen die Bandantriebswelle 33 gedrückt ist und das Zwischenzahnrad 42 mit dem Antriebszahnrad 46 in Eingriff steht. Die Verstellung der Trägerplatte 36 jedes Laufwerkes 8 bzw. 9 zwischen den drei vorgenannten Positionen erfolgt entsprechend der in dem betreffenden Laufwerk eingeschalteten Betriebsart. Auch die beiden als Verstelleinrichtungen dienenden Trägerplatte 36 der beiden Laufwerke 8 und 9 sind volkommen gleich ausgebildet.

Zum Einschalten der Betriebsarten ist, wie bereits erwähnt, jedes der beiden Laufwerke 8 und 9 mit einem eine Anzahl von Tasten aufweisenden Tastensatz 10 bzw. 11 versehen. Wie aus Fig. 2 ersichtlich, weisen die Tastensätze 10 und 11 der beiden Laufwerke 8 und 9 eine gleiche Anzahl von Tasten auf, nämlich je sechs Tasten. Dies ist im Hinblick auf eine möglichst einheitliche Ausbildung der beiden Laufwerke 8 und 9 vorteilhaft. Alle Tasten der beiden Tastensätze 10 und 11 sind entgegen je einer am Tastenschieber angreifenden, nicht dargestellten Rückstellfeder von ihrer Ausschaltlage in ihre Einschaltlage in Richtung des Pfeiles P verstellbar.

Die beiden Tastensätze 10 und 1 weisen je eine Pause-Taste 79 zum Einschalten der Betriebsart "Pause" auf, deren Tastenschieber 80 mit einer nicht dargestellten separaten Rasteinrichtung zusammenwirkt, die beispielsweise durch eine sogenannte Schadow-Klinke gebildet ist. Diese Rasteinrichtung hält die Pause-Taste 79 über ihren Tastenschieber 80 nach einer entsprechenden Betätigung in ihrer Einschaltlage fest. Bei nochmaligem Betätigen der Pause-Taste 79 gibt die Rasteinrichtung den Tastenschieber 80 wieder frei, so dass die Pause-Taste 79 dann durch die am Tastenschieber 80 angreifende Rückstellfeder wieder in ihre Ausschaltlage zurückverstellt wird. Mit der Pause-Taste 79 bzw. über deren nur teilweise dargestellten Tastenschieber 80 ist die Trägerplatte 36 des betreffenden Laufwerkes 8 bzw. 9 in ihrer Pause-Position positioniert bzw. in ihre Pause-Positiion verstellbar. Wie dies erreicht wird, ist allgemein bekannt und für die vorliegende Erfindung nicht wesentlich, weshalb dies in Fig. 2 nicht dargestellt ist.

Ferner weisen die beiden Tastensätze 10 und 11 je eine Wiedergabe-Taste 81 zum Einschalten der Betriebsart "Wiedergabe im Normallauf", je eine Schneller-Vorlauf-Taste 82 zum Einschalten der Betriebsart "Schneller Vorlauf' je eine Schneller-Rücklauf-Taste 83 zum Einschalten der Betriebsart "Schneller Rücklauf" und je eine Stop-Taste 84 zum Einschalten der Betriebsart "Stop" auf. Die Tastenschieber 85, 86, 87 und 88 der vorgenannten Tasten 81, 82, 83 und 84, von denen die Tastenschieber 86, 87 und 88 nur teilweise dargestellt sind, wirken mit der Rastschiene 68 zusammen, die in Fig. 2 nur schematisch angedeutet ist, weil ihr Aufbau und ihre Funktionsweise allgemein bekannt sind. Beispielsweise ist eine solche Rastschienenkonstruktion in der AT-PS 314 219 dargestellt und beschrieben. Die Tastenschieber 85, 86 und 87 können von der Rastschiene 68 rastend festgehalten werden. Der Tastenschieber 88 der Stop-Taste 84 kann in der Rastschiene 68 nicht einrasten und dient zum Verstellen der Rastschiene 68 entgegen der an ihr angreifenden Zugfeder 67, um eine Entrastung von in der Rastscheine 68 eingerasteten Tastenschiebern zu erreichen, wobei dann die Betriebsart "Stop" im Gerät eingeschaltet wird. Mit den Tastenschiebern 86 und 87 ist der Umspul-Antriebskomplex der Antriebseinrichtung 27 entsprechend der gewünschten Betriebsart verstellbar. Da dies für die vorliegende Erfindung nicht wesentlich ist, ist dies der Übersichtlichkeit halber in Fig. 2 nicht dargestellt.

Mit dem Tastenschieber 85 der Wiedergabetaste 81 jedes Tastensatzes 10 bzw. 11 ist die Trägerplatte 36 des betreffenden Laufwerkes 8 und 9 verstellbar. Hierfür ist zwischen einem seitlich abstehenden Verstellfortsatz 89 des Tastenschieber 85 und einem von der Trägerplatte 36 nach unten abstehenden, durch eine Freistellung 90 im Chassis 25 hindurchgeführten Lappen 91 eine Zugfeder 92 gespannt. Bei in ihrer Ausschaltlage befindlicher Wiedergabe-Taste 81, in der sich durch die an ihrem Tastenschieber 85 angreifende Rückstellfeder festgehalten ist, ist mit der Kraft der Zugfeder 92 ein von der Trägerplatte nach unten abstehenden, durch eine Freistellung 93 im Chassis 25 hindurchgeführter Stift 94 gegen einen vom Tastenschieber 85 seitlich abstehenden Positionierfortsatz 95 gehalten. Auf diese Weise ist die in Fig. 2 nicht dargestellte Stop-Position der Trägerplatte 36 festgelegt. Bei in ihrer Einschaltlage mit der Rastschiene 68 entgegen der Rückstellfeder rastend festgehaltener Wiedergabe-Taste 81 zieht der Tastenschieber 85 über die Zugfeder 92 und den Lappen 91 die Trägerplatte 36 in ihre Normallauf-Position, in der sich die Trägerplatte 36 mit ihrem von dem Tastensatz 10 bzw. 11 abgewandten Ende an einem vom Chassis 25 nach oben abstehenden Positionierstift 96 abstützt, wie dies beim ersten Laufwerk 8 in Fig. 2 dargestellt ist. Aus dieser Normallauf-Position kann die Trägerplatte 36 durch Betätigen der Pause-Taste 79 in ihre in Fig. 2 im zweiten Laufwerk 9 dargestellte Pause-Position verstellt werden, welche Verstellung entgegen der Kraft der Zugfeder 92 erfolgt.

Die Tastensätze 10 und 11 der beiden Laufwerke 8 und 9 weisen je noch eine weitere Taste auf, die aber, wie nachfolgend noch beschrieben ist, zum Einschalten von unterschiedlichen Betriebsarten in den beiden Laufwerken dienen. Um diesen Unterschied zu verdeutlichen, sind die beiden Tasten trotz ihrem gleichen Aufbau mit unterschiedlichen Bezugszeichen bezeichnet, nämlich mit den Bezugszeichen 97A und 97B. Die beiden Tasten 97A und 97B sind mit je einem Tastenschieber 98 verbunden, an dem je eine nicht dargestellte Rückstellfeder angreift. Jeder Tastenschieber 98 wirkt ebenfalls mit der Rastschiene 68 zusammen, und zwar so, dass der Tastenschieber 98 nach einer Tastenbetätigung mit der Rastschiene 68 entgegen der Kraft der Rückstellfeder rastend festegehalten wird.

Die Taste 97B des Tastensatzes 11 des zweiten Laufwerkes 9 dient zum Einschalten der Betriebsart "Aufnahme im Normallauf" im zweiten Laufwerk 9. Zum Einschalten der Betriebsart "Aufnahme im Normallauf" im zweiten Laufwerk 9 wird die Aufnahme-Taste 97B betätigt. Dabei wird über ihren Tastenschieber 98 ein im Gerät 1 untergebrachter, dem zweiten Laufwerk 9 zugeordneter Aufnahme/Wiedergabe-Umschalter in seine Aufnahme-Stellung geschaltet und ferner wird ein um eine Achse 99 am Chassis 25 verschwenkbarer ersten Zwischenhebel 100 und von diesem ersten Zwischenhebel 100 ein um eine Achse 101 am Chassis 25 verschwenkbarer zweiter Zwischenhebel 102 verschwenkt. Bei dieser Schwenkbewegung des zweiten Zwischenhebels 102 stösst derselbe gegen einen Mitnehmerfortsatz 103 des Tastenschieber 85 der Wiedergabe-Taste 81 und nimmt diesen Tastenschieber 85 so weit mit, dass auch die Wiedergabe-Taste 81 in ihrer Einschaltlage gezogen wird, ohne dieselbe zu betätigen. Über den Tastenschieber 85 und die Zugfeder 92 wird dabei die Trägerplatte 36 in ihre Normallauf-Position gezogen. Dadurch, dass der dem Laufwerk 9 zugeordnete Aufnahme/Wiedergabe-Umschalter in seine Aufnahme-Stellung geschaltet und die Trägerplatte 36 des zweiten Laufwerkes 9 in ihre Normallauf-Position verstellt ist, ist dann im zweiten Laufwerk die Betriebsart "Aufnahme im Normallauf" eingeschaltet.

In dem Gerät 1 bzw. in den beiden Laufwerken 8 und 9 ist zusätzlich zu den bereits erwähnten Betriebsarten auch eine Betriebsart "Aufeinanderfolgende Wiedergabe im Normallauf" einschaltbar, und zwar durch Betätigen einer Taste des Tastensatzes 10 des ersten Laufwerkes 8 und der Wiedergabe-Taste 81 zum Einschalten der Betriebsart "Wiedergabe im Normallauf" des Tastensatzes 11 des zweiten Laufwerkes 9. Bei der Betriebsart "Aufeinanderfolgende Wiedergabe im Normallauf" wird zuerst im ersten Laufwerk 8 dessen Trägerplatte 36 in ihre Normallauf-Position verstellt und die Betriebsart "Wiedergabe im Normallauf" eingeschaltet und im zweiten Laufwerk 9 dessen Trägerplatte 36 in ihre Pause-Position verstellt und die Betriebsart "Pause" eingeschaltet und danach im ersten Laufwerk 8 dessen Trägerplatte 36 in ihre Stop-Position verstellt und die Betriebsart "Stop" eingeschaltet und im zweiten Laufwerk 9 dessen Trägerplatte 36 in ihre Normallauf-Position verstellt und die Betriebsart "Wiedergabe im Normallauf" eingeschaltet und danach auch im zweiten Laufwerk 9 dessen Trägerplatte 36 in ihre Stop-Position verstellt und die Betriebsart "Stop" eingeschaltet.

Zum Einschalten der Betriebsart "Aufeinanderfolgende Wiedergabe im Normallauf" wird bei vorliegenden Gerät einfach die aufgrund der gleichen Ausbildung der beiden Tastensätze 10 und 11 vorteilhafterweise vorhandene, im ersten Laufwerk 8, das nur zum Wiedergeben ausgebildet ist, aber zum Einschalten der Betriebsart "Aufnahme im Normallauf" nicht benötigte Taste 97A des Tastensatzes 10 des ersten Laufwerkes 8, die der Aufnahme-Taste 97B zum Einschalten der Betriebsart "Aufnahme im Normallauf" des Tastensatzes 11 des zweiten Laufwerkes 9 entspricht, ausgenützt.

Beim Betätigen der Aufeinanderfolgende-Wiedergabe-Taste 97A des Tastensatzes 10 des ersten Laufwerkes 8 wird einerseits analog wie beim Betätigen der Aufnahme-Taste 97B des Tastensatzes 11 des zweiten Laufwerkes 9 über den Tastenschieber 98, den ersten Zwischenhebel 100, den zweiten Zwischenhebel 102 und den Mitnehmerfortsatz 103 des Tastenschiebers 85 dieser Tastenschieber 85 und über die Zugfeder 92 auch die Trägerplatte 36 des ersten Laufwerkes in ihre Normallauf-Position verstellt und folglich im ersten Laufwerk 8 die Betriebsart "Wiedergabe im Normallauf" eingeschaltet. Durch die Verstellung des Tastenschiebers 85 wird auch die Wiedergabe-Taste 81 mitgenommen, ohne dass dieselbe betätigt wird. Zu erwähnen ist, dass dem ersten Laufwerk 8 nicht wie dem zweiten Laufwerk 9 ein vom Tastenschieber 98 betätigbarer Aufnahme/Wiedergabe-Umschalter im Gerät 1 zugeordnet ist.

Beim Betätigen der Aufeinanderfolgende-Wiedergabe-Taste 97A des Tastensatzes 10 des ersten Laufwekres 8 wird andererseits über den Tastenschieber 98 ein mit diesem über eine Stift-Schlitz-Verbindung 104 gekuppelter, um eine Achse 105 am Chassis 25 des Laufwerkes 9 verschwenkbarer, sich vom ersten Laufwerk 8 zum zweiten Laufwerk 9 erstreckender Steuerhebel 106 verstellt, der in der Betriebsart "Aufeinanderfolgende Wiedergabe im Normallauf" beim Einschalten der Betriebsart "Stop" im ersten Laufwerk 8 das Einschalten der Betriebsart "Wiedergabe im Normallauf" im zweiten Laufwerk 9 steuert. Der Steuerhebel 106 trägt am Ende seines sich zur Trägerplatte 36 des zweiten Laufwerkes hin erstreckenden Hebelarmes einen Positionierstift 107, der zum Zusammenwirken mit einer von der Trägerplatte 36 nach oben abstehenden Leiste 108 vorgesehen ist. Über den verschwenkbaren Steuerhebel 106 bzw. dessen Positionierstift 107 und die Leiste 108 wird beim Betätigen der Aufeinanderfolgende-Wiedergabe-Taste 97A des Tastensatzes 10 des ersten Laufwerkes 8 im zweiten Laufwerk 9 dessen Trägerplatte 36, die durch das Betätigen der Wiedergabe-Taste 81 des Tastensatzes 11 des zweiten Laufwerkes 9 in Richtung von ihrer Stop-Position in ihre Normallauf-Position verschoben wird, in ihrer Pause-Position positioniert, wie dies in Fig. 2 beim zweiten Laufwerk dargestellt ist, und die Betriebsart "Pause" eingeschaltet.

Wie aus der vorstehenden Beschreibung der Tastensätze 10 und 11 der beiden Laufwerke 8 und 9 hervorgeht, sind auch die Tastensätze der beiden Laufwerke samt der damit zusammenwirkenden Rastschienen vollkommen gleich ausgebildet.

Im folgenden wird die Betriebswelle des Gerätes in der Betriebsart "Aufeinanderfolgende Wiedergabe im Normallauf" beschrieben. Zum Einschalten der Betriebsart "Aufeinanderfolgende Wiedergabe im Normallauf" werden die Aufeinanderfolgende-Wiedergabe-Taste 97A des Tastensatzes 10 des ersten Laufwerkes 8 und die Wiedergabe-Taste 81 des Tastensatzes 11 des zweiten Laufwerkes 89 betätigt. Dabei kann zuerst die Taste 97A und nachfolgend die Taste 81 des Tastensatzes 11 betätigt werden. Es können die beiden Tasten aber auch gleichzeitig betätigt werden. Vorteilhafterweise sind zum Einschalten der Betriebsart "Aufeinanderfolgende Wiedergabe im Normallauf' nur zwei Tasten zu betätigen. Durch das Betätigen der Aufeinanderfolgende-Wiedergabe-Taste 97A wird einerseits über den ersten Zwischenhebel 100 und den zweiten Zwischenhebel 102 und den Tastenschieber 85 der Wiedergabe-Taste 81 des Tastensatzes 10 des ersten Laufwerkes 8 im ersten Laufwerk die Trägerplatte 36 in ihre Normallauf-Position verstellt und die Betriebsart "Wiedergabe in Normallauf" eingeschaltet und andererseits über den Steuerhebel 106 im zweiten Laufwerk 9 dessen Trägerplatte 36, die durch die Betätigung der Wiedergabe-Taste 81 des Tastensatzes 11 des zweiten Laufwerkes 9 über den Tastenschieber 85 und die Zugfeder 92 in Richtung von ihrer Stop-Position zu ihrer Normallauf-Position verstellt wird, in ihrer Pause-Position positioniert und die Betriebsart "Pause" eingeschaltet, dies deshalb, weil der Positionierstift 107 sich im Verstellweg der Leiste 108 an der Trägerplatte 36 des zweiten Laufwerkes 9 befindet. Es sind somit nach der Betätigung der beiden vorerwähnten Tasten 97A und 81 im ersten Laufwerk 8 die Betriebsart "Wiedergabe im Normallauf" und im zweiten Laufwerk 9 die Betriebsart "Pause" eingeschaltet. Da im zweiten Laufwerk 9 die Betriebsart "Pause" eingeschaltet ist, ist dessen Endabschaltungseinrichtung 53, wie vorstehend erläutert, ausser Funktion gesetzt, so dass keine Betätigung der Rastschiene erfolgen kann und daher die Wiedergabe-Taste 81 des Tastensatzes 11 des zweiten Laufwerkes 9 rastend festgehalten bleibt. Nunmehr wird über die Antriebseinrichtung 27 des ersten Laufwerkes 8 das erste Magnetband 6 angetrieben, wobei von diesem mit dem Magnetkopf 77 der Abtasteinrichtung 74 des ersten Laufwerkes 8 die gespeicherten Signale wiedergeben werden. Dieser Wiedergabebetrieb im ersten Laufwerk 8 kann vom Benützer des Gerätes durch händisches Betätigen der Stop-Taste 84 des Tastensatzes 10 des ersten Laufwerkes 8 beendet werden. Wird die nicht gemacht, erfolgt dieser Wiedergabebetrieb solange, bis das Ende des ersten Magnetbandes 6 erreicht ist. In diesem Fall spricht dann die Endabschaltungseinrichtung 53 des ersten Laufwerkes 8 an. Sowohl durch die Betätigung der Stop-Taste 84 als auch durch Ansprechen der Endabschaltungseinrichtung 53 wird die Rastschiene 68 des ersten Laufwerkes 8 zum Entrasten entgegen der Kraft der an ihr angreifenden Zugfeder 67 verschoben, so dass die Aufeinanderfolgende-Wiedergabe-Taste 97A und die bei deren Betätigung mitgenommene Wiedergabe-Taste 81 des Tastensatzes 10 in ihre Ausschaltlage zurückverstellt werden und daher im ersten Laufwerk 8 die Betriebsart "Stop" eingeschaltet wird. Beim Zurückverstellen der Aufeinanderfolgende-Wiedergabe-Taste 97A in ihre Ausschaltlage wird über deren Tastenschieber 98 der Steuerhebel 106 mitgenommen und daher der Positionierstift 107 aus dem Verstellweg der Leiste 108 verstellt, so dass die Trägerplatte 36 des zweiten Laufwerkes 9 über die Zugfeder 92 in ihre Normallauf-Position gezogen wird und folglich im zweiten Laufwerk 9 die Betriebsart "Wiedergabe im Normallauf" eingeschaltet wird. Hierbei wird auch die Endabschaltungseinrichtung 53 des zweiten Laufwerkes 9 zur normalen Funktion freigegeben. Nunmehr wird über die Antriebseinrichtung 27 des zweiten Laufwerkes 9 das zweite Magnetband 7 angetrieben, wobei von diesem mit dem Magnetkopf 75 der Abtasteinrichtung 74 des zweiten Laufwerkes 9 die gespeicherten Signale wiedergegeben werden. Dieser Wiedergabebetrieb im zweiten Laufwerk 9 kann auch wie beim ersten Laufwerk 8 durch Betätigen 9 oder durch Ansprechen der Endabschaltungseinrichtung 53 des zweiten Laufwerkes 9 beendet werden. In beiden Fällen wird die Rastschiene 68 des zweiten Laufwerkes 9 zum Entrasten entgegen der Kraft der an ihr angreifenden Zugfeder 67 verschoben, so dass dann die Wiedergabe-Taste 81 des Tastensatzes 11 des zweiten Laufwerkes 9 in ihre Ausschaltlage zurückkehrt und folglich auch im zweiten Laufwerk 9 die Betriebsart "Stop" eingeschaltet wird.

Wie aus Vorstehendem hervorgeht, weisen beim erfindungsgemässen Gerät die beiden Laufwerke vollkommen gleich ausgebildete Tastensätze mit einer gleichen Anzahl von Tasten auf. Dies ist im Hinblick auf eine möglichst einheitliche Ausbildung der beiden Laufwerke, um eine möglichst preiswerte Herstellung der Laufwerke und damit des gesamten Gerätes zu erreichen, vorteilhaft. Die beiden Laufwerke weisen ferner auch vollkommen gleich ausgebildete Chassis, Antriebseinrichtungen und Endabschaltungseinrichtungen sowie Trägerplatte auf. Lediglich in ihren Abtasteinrichtungen, von denen eine nur einen Magnetkopf und eine Bandhöhenführung und die andere zwei Magnetköpfe aufweist, unterscheiden sich die beiden Laufwerke. Auf diese Weise ist erreicht, dass beide Laufwerke grössenteils in einem einzigen Produktionsvorgang und dadurch besonders preiswert hergestellt werden können, was besonders bei einer mechanisierten Produktion zum Tragen kommt. Nachdem im Zuge der Produktion der beiden Laufwerke die gemeinsame Produktionsphase abgeschlossen ist, werden zur Bildung des beim erfindungsgemässen Gerät vorgesehenen Doppellaufwerkes einfach die beiden einzelnen Laufwerke mit der Schwalbenschwanz-Verbindung zusammengefügt und anschliessend nun mehr die unterschiedlichen Abtasteinrichtungen auf der Trägerplatte des betreffenden Laufwerkes angebracht und in einfacher Weise der Steuerhebel in sein Lage am Chassis des zweiten Laufwerkes eingesetzt, so dass insgesamt eine einfache Herstellung eines Doppellaufwerkes erreicht ist. Die Aufeinanderfolgende-Wiedergabe-Taste des Tastensatzes des ersten Laufwerkes erfüllt vorteilhafterweise eine Doppelfunktion, weil mit derselben im ersten Laufwerk die Betriebsart "Wiedergabe im Normallauf" und im zweiten Laufwerk die Betriebsart "Pause" einschaltbar ist. Dadurch, dass die Aufeinanderfolgende-Wiedergabe-Taste eine Doppelfunktion erfüllt, ist erreicht, dass zum Einschalten der Betriebsart "Aufeinanderfolgende Wiedergabe im Normallauf" nur zwei Tasten insgesamt, nämlich die Aufeinanderfolgende-Wiedergabe-Taste des Tastensatzes des ersten Laufwerkes und die Wiedergabe-Taste des Tastensatzes des zweiten Laufwerkes, zu betätigen sind, wodurch eine besonders einfache Bedienung zum Einschalten dieser Betriebsart erreicht ist. Dabei ist im Hinblick auf eine Vermeidung von Fehlbedienungen vorteilhaft, dass die Betätigung der beiden Tasten sowohl zeitlich aufeinanderfolgend als auch gleichzeitig erfolgen kann. Dadurch, dass der Steuerhebel unmittelbar mit der Trägerplatte des zweiten Laufwerkes zur Steuerung derselben zusammenwirkt, ist eine besonders einfache und betriebssichere Ausbildung erhalten.

Selbstverständlich ist im Rahmen der Erfindung noch eine Reihe von Ausführungen möglich. Beispielsweise müssen die Aufeinanderfolgende-Wiedergabe-Taste des Tastensatzes des ersten Laufwerkes und die Aufnahme-Taste des Tastensatzes des zweiten Laufwerkes nicht über die beiden Zwischenhebel und den Tastenschieber der Wiedergabe-Taste auf die Trägerplatte einwirken, sondern können ohne diesen Umweg auch analog wie die Wiedergabe-Taste mit der Trägerplatte in Wirkverbindung stehen. Bei dem Gerät gemäss dem vorstehend beschriebenen Ausführungsbeispiel wirken die Tasten unmittelbar auf die durch sie zu verstellenden Geräteteile ein. Es könnte aber jedes Laufwerk auch einen sogenannten Tastenservomechanismus aufweisen, der durch Betätigen der Tasten ausgelöst wird und der seinerseits die Verstellung der betreffenden Geräteteile durchführt. Hierdurch können dann auch nichtrastende Tasten verwendet werden, die nur solange zu betätigen sind, bis der betreffende Tastenservomechanismus angesprochen hat. Ein erfindungsgemäss ausgebildetes Gerät kann auch zwei Laufwerke erhalten, die je als sogenannte Reverse-Laufwerke ausgebildet sind, bei denen zuerst eine Widergabebetrieb in einer Normallaufrichtung des Magnetbandes und unmittelbar anschliessend ein Wiedergabebetrieb in der entgegengesetzten Normallaufrichtung des Magnetbandes erfolgt. Bei einem solchen erfindungsgemässen Gerät mit zwei Reverse-Laufwerken ist die Funktionsweise so gewählt, dass in der Betriebsart "Aufeinanderfolgende Wiedergabe im Normallauf" die Umschaltung vom Wiedergabebetrieb im ersten Laufwerk auf den Wiedergabebetrieb im zweiten Laufwerk mit Hilfe der Endabschaltungseinrichtung des ersten Laufwerkes erst dann erfolgt, wenn im ersten Laufwerk die Wiedergabebetriebe in den beiden entgegengesetzten Normallaufrichtungen abgeschlossen sind.

## Patentansprüche

1. Aufzeichnungs- und Wiedergabegerät 1 für in Kassetten 4, 5 untergebrachte, bandförmige Aufzeichnungsträger 6, 7 mit einem zum Antreiben und Abtasten eines ersten Aufzeichnungsträgers 6 vorgesehenen, nur zum Wiedergeben ausgebildeten ersten Laufwerk 8, in dem zumindest die Betriebsarten "Stop", "Pause" und "Wiedergabe im Normallauf" einschaltbar sind, und mit einem zum Antreiben und Abtasten eines zweiten Aufzeichnungsträgers 7 vorgesehenen, zum Aufzeichnen und Wiedergeben ausgebildeten zweiten Laufwerk 9, in dem zumindest die Betriebsarten "Stop", "Pause", "Aufnahme im Normallauf" und "Wiedergabe im Normallauf" einschaltbar sind, die beide je eine mehrere Antriebsteile 32, 33, 38, 42, 45, 46, 50, 51, 52 aufweisende Antriebseinrichtung 27 zum Antreiben des betreffenden Aufzeichnungsträgers 6, 7, je eine Abtasteinrichtung 74 zum Abtasten des betreffenden Aufzeichnungsträgers 6, 7 und je eine zwischen einer Stop-Position, einer Pause-Position und einer Normallauf-Position verstellbare Verstelleinrichtung 36 zum Verstellen der Abtasteinrichtung 74 und mindestens eines Antriebsteiles 38, 42 der Antriebseinrichtung 27 des betreffenden Laufwerkes 8,9 entsprechend der in demselben eingeschalteten Betriebsart aufweisen und die beide mit je einem eine Anzahl von Tasten 79, 81, 82 83, 84, 97A, 97B aufweisenden Tastensatz 10, 11 zum Einschalten der Betriebsarten in dem betreffenden Laufwerk 8, 9 versehen sind, wobei durch Betätigen mindestens einer Taste 79, 81, 97A, 97B des Tastensatzes 10, 11 jedes Laufwerkes 8, 9 die Verstelleinrichtung 36 desselben verstellbar ist und durch Betätigen einer Taste 97A des Tastensatzes 10 des ersten Laufwerkes 8 und mindestens der Taste 81 zum Einschalten der Betriebsart "Wiedergabe im Normallauf" des Tastensatzes 11 des zweiten Laufwerkes 9 eine Betriebsart "Aufeinanderfolgende Wiedergabe im Normallauf" in den beiden Laufwerken 8, 9 einschaltbar ist, bei der zuerst im ersten Laufwerk 8 dessen Verstelleinrichtung 36 in ihre Normallauf-Position verstellt und die Betriebsart "Wiedergabe im Normallauf" eingeschaltet und im zweiten Laufwerk 9 dessen Verstelleinrichtung 36 in ihre Pause-Position verstellt und die Betriebsart "Pause" eingeschaltet und danach im ersten Laufwerk 8 dessen Verstelleinrichtung 36 in ihre Stop-Position verstellt und die Betriebsart "Stop" eingeschaltet und im zweiten Laufwerk 9 dessen Verstelleinrichtung 36 in ihre Normallauf-Position verstellt und die Betriebsart "Wiedergabe im Normallauf" eingeschaltet und danach auch im zweiten Laufwerk 9 dessen Verstelleinrichtung 36 in ihre Stop-Position verstellt und die Betriebsart "Stop" eingeschaltet wird, und mit einem sich vom ersten Laufwerk 8 zum zweiten Laufwerk 8 erstreckenden Steuerhebel 106, der in der Betriebsart "Aufeinanderfolgende Wiedergabe im Normallauf" beim Einschalten der Betriebsart "Stop" im ersten Laufwerk 8 das Einschalten der Betriebsart "Wiedergabe im Normallauf" im zweiten Laufwerk 9 steuert, dadurch gekennzeichnet, dass die Tastensätze 10, 11 der beiden Laufwerke 8, 9 eine gleiche Anzahl von Tasten 79, 81, 82, 83, 84, 97A, 97B aufweisen und dass die Betriebsart "Aufeinanderfolgende Wiedergabe im Normallauf" durch Betätigen der Taste 97A des Tastensatzes 10 des ersten Laufwerkes 8, die der Taste 97B zum Einschalten der Betriebsart "Aufnahme im Normallauf" des Tastensatzes 11 des zweiten Laufwerkes 9 entspricht, und der Taste 81 zum Einschalten der Betriebsart "Wiedergabe im Normallauf" des Tastensatzes 11 des zweiten Laufwerkes 9 einschaltbar ist und dass durch Betätigen der Taste 97A des Tastensatzes 10 des ersten Laufwerkes 8, die der Taste 97B der Einschalten der Betriebsart "Aufnahme im Normallauf" des Tastensatzes 11 des zweiten Laufwerkes 9 entspricht, im ersten Laufwerk 8 dessen Verstelleinrichtung 36 in die Normallauf-Position verstellt und die Betriebsart "Wiedergabe im Normallauf" eingeschaltet und über den durch Betätigen dieser Taste 97A verstellbaren Steuerhebel 106 im zweiten Laufwerk 9 dessen Verstelleinrichtung 36 in ihrer Pause-Position positioniert und die Betriebsart "Pause" mechanisch eingeschaltet wird.

## Claims

1. A recording and reproducing apparatus 1 for record carriers 6, 7 in the form of tapes accommodated in cassettes 4, 5, which apparatus comprises a first deck 8 for driving and scanning a first record carrier 6, which first deck is constructed for reproduction only and can be set to at least the "stop", "stand-by" and "normal reproduction" modes, and a second deck 19 for driving and scanning a second record carrier 7, which second deck is constructed for recording and reproducing and can be set to at least the "stop", "stand-by", "normal reproduction" and "normal recording" modes, the two decks each comprising a drive means 27 for driving the relevant record carrier 6, 7, which drive means each comprise a plurality of drive elements 32, 33, 38, 42, 45, 46, 50, 51, 52, a scanning device 74 for scanning the relevant record carrier 6, 7, and a positioning device 36 which can be set to a stop position, a stand-by position and a normal transport position, for positioning the scanning device 74 and at least one drive element 38, 42 of the drive means 27 of the relevant deck 8, 9 in conformity with the mode to which said deck has been set, which decks each have a key set 10, 11 comprising a plurality of keys 79, 81, 82, 83, 84, 97A, 97B for selecting the modes of operation in the relevant deck 8, 9, the positioning device 36 of each deck 8, 9 being movable by actuation of at least one key 79, 81, 97A, 97B of the key set 10, 11 of each deck 8, 9, and both decks 8, 9 being switchable to a "successive normal reproduction" mode by actuation of a key 97A of the key set 10 of the first deck 8 and at least the key 81 for the "normal reproduction" mode of the key set 11 of the second deck 9, in which "successive normal reproduction" mode first the positioning device 36 in the first deck 8 is set to its normal-transport position to start the "normal reproduction" mode, and the positioning device 36 in the second deck 9 is set to its standby position to select the "standby" mode, subsequently the positioning device 36 in the first deck 8 is set to its stop position to select the "stop" mode and the positioning device 36 in the second deck 9 is set to its normal-transport position to start the "normal reproduction" mode, and after this the positioning device 36 in the second deck 9 is also set to its stop position to select the "stop" mode, and comprising a control lever 106 which extends from the first deck 8 to the second deck 9, which lever in the "successive normal reproduction" mode, when the first deck 8 is set to the "stop" mode, controls the start of the "normal reproduction" mode in the second deck 9, characterised in that the key sets 10, 11 of the two decks 8, 9 have the same number of keys 79, 81, 82, 83, 84, 97A, 97B, the "successive normal reproduction" mode can be started by actuating the key 97A of the key set 10 of the first deck 8, which corresponds to the key 97B for starting the "normal recording" mode of the key set 11 of the second deck 9, and the key 81 for starting the "normal reproduction" mode of the key set 11 of the second deck 9, and by actuating the key 97A of the key set 10 of the first deck 8, which corresponds to the key 97B for the "normal recording" mode of the key set 11 of the second deck 9, the positioning device 36 in the first deck 8 is set to the normal-transport position and the "normal reproduction" mode is started, and *via* the control lever 106, which is movable by actuation of said key 97A in the second deck 9, the positioning device 36 of this deck is set to its stand-by position and the "stand-by" mode is selected mechanically.

## Revendications

1. Appareil d'enregistrement et de reproduction (1) pour des supports d'enregistrement en forme de bande (6, 7) logés dans des cassettes (4, 5), comportant un premier mécanisme d'entraînement (8) conçu uniquement pour la reproduction, prévu pour entraîner et analyser un premier support d'enregistrement (6) et dans lequel peuvent être enclenchés au moins les modes "arrêt", "pause" et "reproduction en défilement normal", et un second mécanisme d'entraînement (9) conçu pour l'enregistrement et la reproduction, prévu pour entraîner et analyser un second support d'enregistrement et dans lequel peuvent être enclenchés au moins les modes "arrêt", "pause", "enregistrement en défilement normal" et "reproduction en défilement normal", qui, tous deux comprennent chacun un dispositif d'entraînement (27) comportant plusieurs organes d'entraînement (32, 33, 38, 42, 45, 46, 50, 51, 52) pour entraîner le support d'enregistrement correspondant, chacun un dispositif d'analyse (74) pour analyser le support d'enregistrement (6, 7) en question et chacun un dispositif de déplacement déplaçable entre une position d'arrêt, une position de pause et une position de défilement normal pour déplacer le dispositif d'analyse (74) et au moins un organe d'entraînement (38), (42) du dispositif d'entraînement (27) du mécanisme d'entraînement (8,9) correspondant d'une manière appropriée au mode enclenché dans ce mécanisme et qui, tous deux, sont pourvus chacun d'un jeu de touches (10, 11) comportant plusieurs touches (79, 81, 82, 83, 84, 97A, 97B) pour enclencher les modes dans le mécanisme d'entraînement (8, 9) en question, de sorte que, par l'actionnement d'au moins une touche (79, 81, 97A, 97B) du jeu de touches (10, 11) de chaque mécanisme d'entraînement (8, 9), le dispositif de déplacement (36) de ce mécanisme peut être déplacé et, par l'actionnement d'une touche (97A) du jeu de touches (10) du premier mécanisme d'entraînement (8) et d'au moins la touche (81) destinée à enclencher le mode "reproduction en défilement normal" du jeu de touches (11) du second mécanisme d'entraînement (9), peut être enclenché, dans les deux mécanismes d'entraînement (8, 9), un mode "reproductions successives en défilement normal" dans lequel tout d'abord dans le premier mécanisme d'entraînement (8) dont le dispositif de déplacement (36) est déplacé dans sa position de défilement normal et le mode "reproduction en défilement normal" est enclenché, et dans le second mécanisme d'entraînement (9) dont le dispositif de déplacement (36) est déplacé dans sa position de pause et le mode "pause" est enclenché, et ensuite dans le premier mécanisme d'entraînement (8) dont le dispositif de déplacement (36) est déplacé dans sa position d'arrêt et le mode "arrêt" est enclenché et dans le second mécanisme d'entraînement (9) dont le dispositif de déplacement (36) est déplacé dans sa position de défilement normal et le mode "reproduction en défilement normal" est enclenché et ensuite également dans le second mécanisme d'entraînement (9) dont le dispositif de déplacement (36) est déplacé dans sa position d'arrêt et le mode "arrêt" est enclenché, et un levier de commande (106) qui s'étend à partir du premier mécanisme d'entraînement (8) vers le second mécanisme d'entraînement (9) et qui, dans le mode "reproductions successives en défilement normal", lors de l'enclenchement du mode "arrêt" dans le premier mécanisme d'entraînement (8), commande l'enclenchement du mode "reproduction en défilement normal" dans le second mécanisme d'entraînement (9), caractérisé en ce que les jeux de touches (10, 11) des deux mécanismes d'entraînement (8, 9) comprennent un même nombre de touches (79, 81, 82, 83, 84, 97A, 97E) et que le mode "reproductions successives en défilement normal" peut être enclenché par actionnement de la touche (97A) du jeu de touches (10) du premier mécanisme d'entraînement (8), qui correspond à la touche (97B) pour l'enclenchement du mode "enregistrement en défilement normal" du jeu de touches (11) du second mécanisme d'entraînement (9), et de la touche (81) pour l'enclenchement du mode "reproduction en défilement normal" du jeu de touches (11) du second mécanisme d'entraînement (9) et que, par actionnement de la touche (97A) du jeu de touches (10) du premier mécanisme d'entraînement (8), qui correspond à la touche (97B) pour l'enclenchement du mode "enregistrement en défilement normal" du jeu de touches (11) du second mécanisme d'entraînement (9), dans le premier mécanisme d'entraînement (8), le dispositif de déplacement (36) est déplacé dans la position de défilement normal et le mode "reproduction en défilement normal" est enclenché et par l'intermédiaire du levier de commande (106) pouvant être déplacé par l'actionnement de cette touche (97A), dans le second mécanisme d'entraînement (9), le dispositif de déplacement (36) est positionné dans sa position de pause et le mode "pause" est enclenché mécaniquement.
